# EUROPEAN PATENT SPECIFICATION

(11) **EP 1 066 165 B1**
(45) Date of publication and mention of the grant of the patent: **05.06.2002**
(21) Application number: 98913179.2
(22) Date of filing: 26.03.1998
(51) Int. Cl.: B60C 15/00, B60C 15/06

(54) **LOCKED BEAD CONSTRUCTION**
GESCHLOSSENE WULSTKONSTRUKTION
FABRICATION DE BANDE DE ROULEMENT VERROUILLEE

(43) Date of publication of application: 10.01.2001
(73) Proprietor: THE GOODYEAR TIRE & RUBBER COMPANY, Akron, Ohio 44316-0001 (US)
(72) Inventor: LAMOCK, Andre, B-6633 Fauvillers (BE); BERNARD, Carlo, L-7590 Beringen (LU)
(74) Representative: Leitz, Paul
(86) International application number: US9806034
(87) International publication number: WO9948708

(56) References cited:
- EP-A- 0 287 497
- WO-A-92/12020
- DE-A- 4 026 430
- US-A- 4 922 985
- US-A- 5 058 649
- PATENT ABSTRACTS OF JAPAN vol. 017, no. 439 (M-1462), 13 August 1993 & JP 05 096905 A (SUMITOMO RUBBER IND LTD), 20 April 1993

## Description

### Technical Field

The present invention relates to the bead portion of a pneumatic tire, and more specifically of a tire for heavy duty use, comprising a bead core with a round or polygonal shape, an apex, a carcass comprising three reinforcing structures, comprising each at least one reinforcing ply.

### Background Art

Radial carcass tires for heavy duty use are often used under heavy load conditions which place the components within a tire under severe stress. The bead regions of such tires are particularly subject to large deformations caused by flexing of the sidewalls which can produce sheer stresses between the carcass plies and heat build-up.

The desirability of having the turn-up portions of the carcass ply (or plies) of a pneumatic tire extend radially outwardly of the bead core the shortest possible distance is the premise on which prior art locked beads for passenger car tires were developed. The advantages included improved bead durability, and reduced material costs.

US-A- 4,922,985 discloses a passenger car tire with a carcass ply having a main portion that extends between both beads of the tire and turn-up portions that are anchored around each bead core. Tires according to this prior art and according to US-A 5,058,649 have the radially outer edges of the turn-up portions of the carcass ply disposed radially outwardly of the bead cores a minimal distance and are in contact with the main portion of the carcass ply. The turn-up portion of the carcass ply extends radially outwardly of the bead core a minimal distance to allow for some pull-down of the carcass ply during the shaping and curing process.

Components that are usually located in the bead portion of tires include a toe guard and a chafer strip. A toe guard is a layer of reinforcing cords folded around the carcass ply and bead core on the side of the carcass ply furthest away from the bead core. The primary purpose of a toe guard is to protect the bead from damage during mounting of the tire on a rim and subsequent use of the tire on a vehicle. A chafer may be either a tough elastomeric material that protects the bead portion from abrasion during mounting and use of the tire, or a layer of fabric extending from the bead core to about the same radial height as the edge of the turn-up. Suitable elastomeric materials surround the bead core and coat the carcass plies and the breaker plies; other elastomeric components complete the bead portion of the tire.

Tires including the features recited in the preambles of the independent claims are e.g. known from EP-A-287 497.

It is an object of the present invention to provide a tire construction with particularly durable bead portions which are cheap to manufacture. It is a further object of the present invention to improve the locking of at least one of the carcass plies in the bead portion. Other objects of the invention will be apparent from the following description and claims

### Disclosure of Invention

There is provided, in accordance with the invention, a pneumatic tire having (a) a pair of axially spaced apart bead portions with annular bead cores, each bead core having a radial cross-sectional shape which is substantially round or polygonal; and (b) a pair of rubber apex strips of a generally triangular cross-section neighboring the bead cores the apex stripes having a radial height A and extending radially outwardly from the bead cores into the sidewalls of the tire; and (c) at least three sets, a first radially inner, a second intermediate and a third radially outer set of carcass reinforcing structures, having each a main portion extending between the beads and their edges anchored in the beads. The second carcass reinforcing structure is folded radially outwardly around each said bead core. so that the two edges of the second carcass reinforcing structure are located between the apexes and their neighboring bead cores. The third carcass reinforcing structure has its turndown portions folded radially inwardly around the second carcass reinforcing structure and the bead cores, so that the edges of the plies of the third carcass reinforcing structure are located at the radially inner side of the bead cores. The first carcass reinforcing structure has its turnup portions folded radially outwardly around each bead core, the second carcass reinforcing structure and the third carcass reinforcing structure so that the edges of the plies of the first carcass reinforcing structure are located between the radially outer portion of the bead core and the maximum section height of the tire.

There is further provided a pneumatic tire having (a) a pair of axially spaced apart bead portions with annular bead cores, each bead core having a radial cross-sectional shape which is substantially round or polygonal; (b) a pair of rubber apex strips of a generally triangular cross-section neighboring the bead cores, the apex strips having a radial height A and extending radially outwardly from the bead cores into the sidewalls of the tire, (c) a first bead wrap ply structure; (d) at least two sets, a second intermediate and a third radially outer set of carcass reinforcing structures. having each a main portion extending between the beads and their edges anchored in the beads. The second carcass reinforcing structure is folded radially outwardly around each said bead core, so that the two edges of the second carcass reinforcing structure are located between the apexes and their neighboring bead cores. The third carcass reinforcing structure has its turndown portions folded radially inwardly around the second carcass reinforcing structure and the bead cores, so that the edges of the plies of the third carcass reinforcing structure are located at the radially inner side of the bead cores. The first bead wrap ply structure has its turnup portions folded radially outwardly around each bead core, the second carcass reinforcing structure and the third carcass reinforcing structure so that the edges of the plies of the first bead wrap ply structure are located between the radially outer portion of the bead core and the maximum section height of the tire, the first bead wrap ply structure extending axially inward and radially outward from the radially inner portion of the bead core to a radial distance at least one half the radial height of the bead core.

There is still further provided a pneumatic tire having (a) a pair of axially spaced apart bead portions with annular bead cores, each bead core having a radial cross-sectional shape which is substantially round or polygonal; (b) a pair of rubber apex strips of a generally triangular cross-section neighboring the bead cores the apex stripes having a radial height A and extending radially outwardly from the bead cores into the sidewalls of the tire; and (c) a first bead wrap ply structure; (d) at least one set, a second set of carcass reinforcing structures, having a main portion extending between the beads and their edges anchored in the beads. The second carcass reinforcing is folded radially outwardly around each said bead core, so that the two edges of the second carcass reinforcing structure are located between the apexes and their neighboring bead cores. The first bead wrap ply structure has its turnup portions folded radially outwardly around each bead core and the second carcass reinforcing structure so that the edges of the plies of the first bead wrap ply structure are located between the radially outer portion of the bead core and the maximum section height of the tire. The first bead wrap ply structure extends axially inward and radially outward from the radially inner portion of the bead core to a radial distance at least one half the radial height of the bead core.

The invention discloses bead structures having an increased cohesion between the bead core, the carcass plies and the apex through creation of a stiffness gradient between the reinforcement material and the bead core and the rubber of the apex. Furthermore the invention has the bead core act as a pivot, creating thereby a tight interlocking of the carcass plies with the bead core and the apex.

The advantages obtained by the invention are an improved anchoring of the tire structure to the rim. The stress intensive inflection points in carcass bending, located in the upper apex zone in classical prior art constructions are eliminated trough the concept of a carcass pivoting around the bead core axis. Stress peaks at carcass ply edges are reduced so as to have improved durability of the bead portions. A still further advantage is a reduced occurrence of pulled ply condition in the tire building process.

### Definitions

"Aspect Ratio" means the ratio of its section height (SH) to its section width (SW).

"Axial" and "axially" means the lines or directions that are parallel to the axis of rotation of the tire.

"Bead" means that part of the tire comprising an annular tensile member, the bead core, wrapped by ply cords and shaped, with or without other reinforcement elements such as flippers, chippers, apexes, toe guards and chafers, to fit the design rim. The bead core is usually made of annularly wound steel wire.

"Belt reinforcing structure" means at least two annular layers or plies of parallel cords, woven or unwoven, underlying the tread, unanchored to the bead, and having both left and rift cord angles.

"Bias ply" means a tire having bias angled carcass, the angle of the cords being about 35° to 65° relative to the equatorial plane of the tire. Each adjacent ply has cords equal but oppositely oriented.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Equatorial Plane (EP)" means the plane perpendicular to the tire's axis of rotation and passing through the center of its tread.

"Inner" means toward the center of the tire and "outer" means toward its exterior.

"Ply" means a continuous layer of rubber-coated parallel cords. The cords may be of metallic or textile material.

"Radial" and "radially" mean directions radially toward or away from the axis of rotation of the tire.

"Radial ply tire" means a belted or circumferentially-restricted pneumatic tire in which the ply cords which extend from bead to bead are laid at cord angles between 65° and 90° with respect to the equatorial plane of the tire.

"Section Height" (SH) means the radial distance from the nominal rim diameter to the outer diameter of the tire at its equatorial plane.

"Section Width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

### Brief Description of Drawings

Fig 1 illustrates a perspective view of a preferred embodiment agricultural tire 10 made in accordance with the present invention
Fig. 2 is a cross-sectional view of the tire 10 of Fig. 1.
Fig. 3 is a schematic cross-sectional view of one of the two bead portions of a tire according to the present invention.
Figs. 4 and 5 are schematic cross-sectional views of one of two bead portions of alternative embodiment tires.

### Detailed Description of the Invention

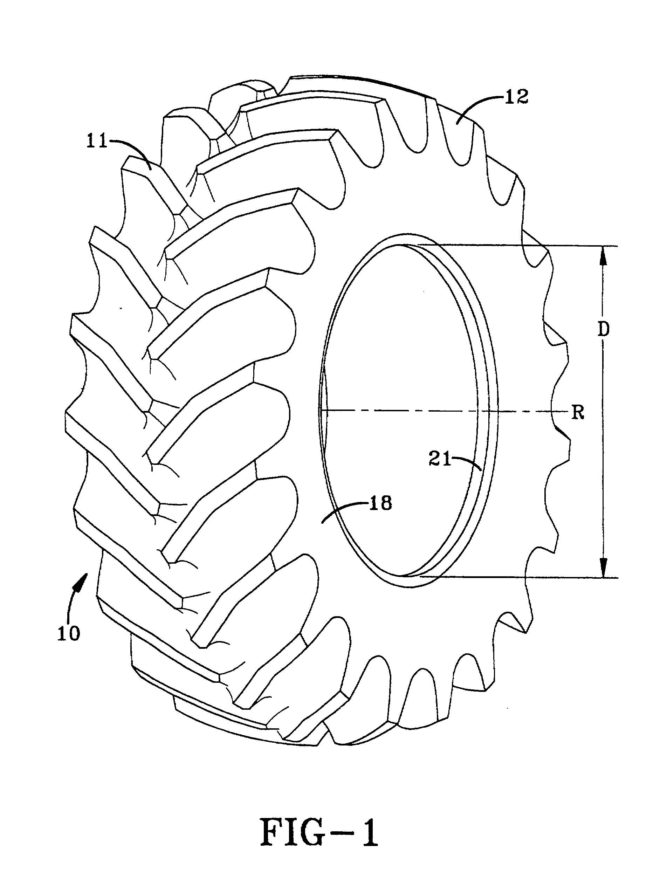

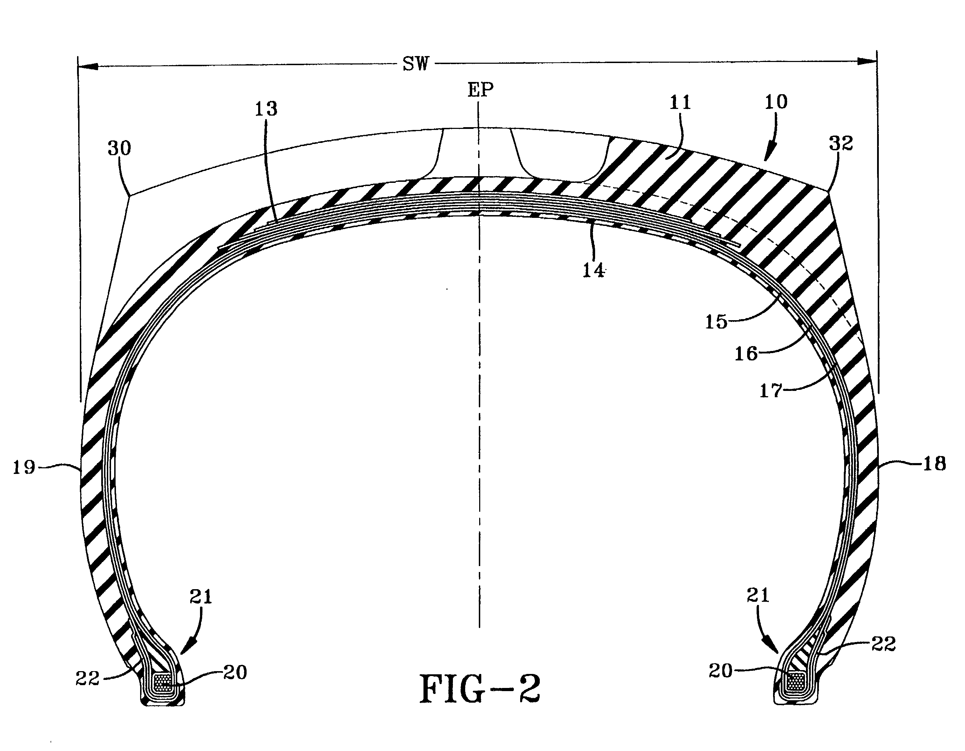

With particular reference now to Figs. 1 and 2 a preferred embodiment of the pneumatic agricultural tire 10 made according to the present invention is illustrated.

The illustrated tire 10 has a nominal rim diameter (D) ranging from 12 to 58 inches (300 to 1475 mm). The tire 10 has an axis of rotation R, an equatorial plane (EP) and a maximum section width (SW).

Placed circumferentially about the radially outer surface of several carcass reinforcing structures 15,16,17 and beneath tread portion 12 provided with lugs 11, is a tread reinforcing belt structure 13. In the particular embodiment illustrated, belt structure 13 comprises four cut belt plies of comparable width. The cords reinforcing the belt plies comprise textile material such as polyester or aramid. The cords of the different belt plies are oriented, with respect to the equatorial plane of the tire, at angles ranging between 15 and 30 degrees and preferably at about 23 degrees. The angles mentioned here are as measured on a cured tire. The cords of two adjacent belt plies are disposed in an opposite direction to the equatorial plane. However, the belt structure 13 may comprise any number of belt plies of any desired configuration and the cords may be disposed at any desired angle.

The radial carcass reinforcing structures 15,16,17 extend from bead portion 21 through sidewall portion 18, tread portion 12, sidewall portion 19 to bead portion 21'. The turnup portions 25,26 and turn down portion 27 of the three carcass reinforcing structures 15,16,17 are wrapped about bead cores 20,20' respectively. The tire 10 may include a conventional inner liner 14 forming the inner peripheral surface of the tire 10 if the tire is to be of the tubeless type.

In the particular embodiment illustrated, there is provided a radially inner first carcass reinforcing structure 15, a second radially intermediate carcass reinforcing structure 16 and a radially outer third carcass reinforcing structure 17. Each of these structures 15,16,17 comprises in the preferred embodiment of the invention one ply or layer of parallel cords. It is to be understood that the invention may also be practiced by using in one or more of the carcass reinforcing structures. two or more plies. The cords of the plies of the carcass reinforcing structures 15,16,17 are oriented at an angle of at least 55 degrees with respect to the equatorial plane of the tire 10. In the particular embodiment illustrated, said cords are oriented at angles ranging between 80 and 90 degrees with respect to the equatorial plane of the tire. The cords may be made of any material which may be used for cord reinforcement of farm tires, for example, and not by way of limitation, steelcord, flexten, rayon, nylon, hyten and polyester and carbon fiber. In the particular embodiment illustrated, the cords are made from 2100/3 nylon and have a lateral spacing of 23 EPI (ends per inch).

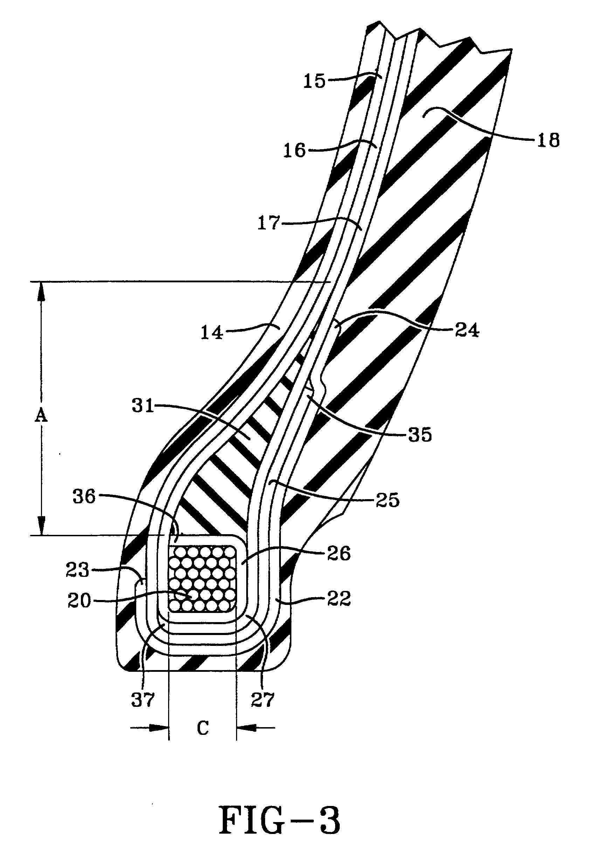

With particular reference to Figure 3, the first, second and third carcass reinforcing structures 15,16,17 have turnup portions 25,26 and turndown portion 27 respectively, which wrap about the bead cores 20,20', their main portions extending between the two beads 21,21' of the tire 10. The bead core 20 has a substantially rectangular cross section in the represented embodiment with a maximum axial width C. It is understood that the invention applies equally to bead cores having a round or polygonal section such as a hexagonal section. In the illustrated embodiment the bead core is at least partially reinforced with steel wire and the free spaces between adjacent turns of wire are filled with rubbery material.

Radially outwardly of the bead core, the apex 31 can be distinguished. The apex is made from rubber having a Shore A hardness comprised between 60 and 95 and a maximum axial width B near the bead core, which width can be compared in the illustrated embodiment to the maximum axial width C of the bead core. In farm tires, the apex extends radially from the bead core to a maximum radial height A, which is about 30% of the maximum section height of the tire.

The turnup portion 26 of the second carcass reinforcing structure 16 is folded around the bead core 20 and terminates radially above the bead core. The edge 36 of the second carcass reinforcing structure 16 is located between the apex 31 and its neighboring bead core 20. In a preferred embodiment the edges 36 are close to the main portion of the structure 16 so as to extend on at least 50%, preferably at least 80% of the maximum axial bead core width C between the apex 31 and the bead core 20; this confers an excellent anchoring of the second carcass reinforcing structure around the bead.

The turndown portion 27 of the third carcass reinforcing structure 17 wraps about the second carcass reinforcing structure tumup portion 26 and the bead core 20. The turndown portions 27 are folded radially inwardly around the second carcass reinforcing structure 16 and the bead core 20, so that the edges of the ply(ies) of the third carcass reinforcing structure are located near the axially inner side of the bead core. In the represented embodiment, as the bead is substantially square, the edge 37 of the carcass reinforcing structure 17 is preferably close to radially inner bead core edge. It is equally acceptable to have the edge 37 extend further between the first and second carcass reinforcing structures 15, 16 up to the radially inner portion of the apex 31.

The turnup portion 25 of the first carcass reinforcing structure 15 is folded radially outwardly around each bead core 20, the turnup portion 26 of the second carcass reinforcing structure 16 and the turn down portion 27 of the third carcass reinforcing structure 17 so that the edge 35 of the first carcass reinforcing structure 15 terminates radially outwardly of the apex 31. In the represented embodiment the edge 35 is located at about 80% of the radial height A of the apex 31. Preferably the edge 35 of the first reinforcing structure 15 is located between half and full radial height A of the apex 31. It should however be noted that in principle the edge 35 can extend much farther into the sidewall 18, 19 of the tire, up to its maximum section width.

The bead portion of the tire comprises further a toe guard 22 whose primary purpose is to protect the bead 21, 21' from damage during mounting of the tire on a rim and subsequent use of the tire on a vehicle. The toe guard rubber is reinforced with textile material, which in the described embodiment is square woven nylon. The inclination of the nylon cords with respect to an axial plane of the tire is not critical and is usually comprised between 35° and 55° degrees. The toe guard 22 is at least partly wound around the first carcass reinforcing structure 15 in the bead portion 21 of the tire so that its radial inner edge 23 is located at about 50% of the radial extend of the axially inner bead core portion and its radially outer edge 24 above the maximum radial extend of the axially outer bead core portion. It should be avoided to have the radially outer edge 24 of the toe guard close to the radially outer edge 35 of the first carcass reinforcing structure 15; such neighborhood and the resulting shear stresses could lead to ply separation problems. In the represented embodiment the toe guard 22 covers the edge 35 of the first carcass reinforcing structure 15 and the radially outer edge 24 of the toe guard 22 is close to the radially outer edge of the apex 31. This toe guard 22 alternatively can be a bead wrapping ply structure 22 as discussed below.

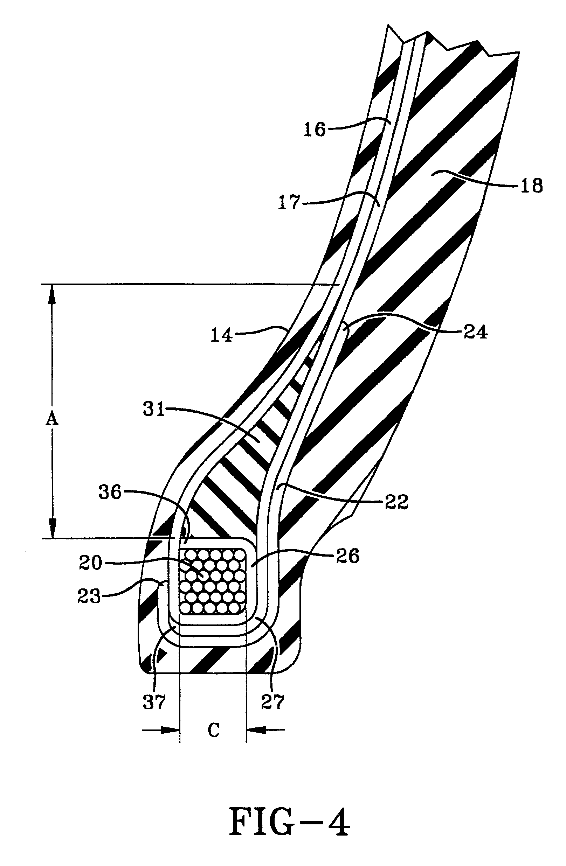

Though the invention is particularly advantageous in farm tires, it can be contemplated to implement such bead construction in bias tires or in any other tire having at least two carcass reinforcing structures as shown in figure 4. Depending on the strength required for the carcass and the reinforcement material chosen, the different structures may then comprise one, two or more reinforcing plies. As shown in figure 4 the first ply structure has been replaced with a first bead wrap ply structure 22 referred to earlier as the toe guard 22 of figure 3. The first bead wrap ply structure can have cords radially extending or may compromise to bias layers of plies. In any case the structure permits fewer plies to be employed.

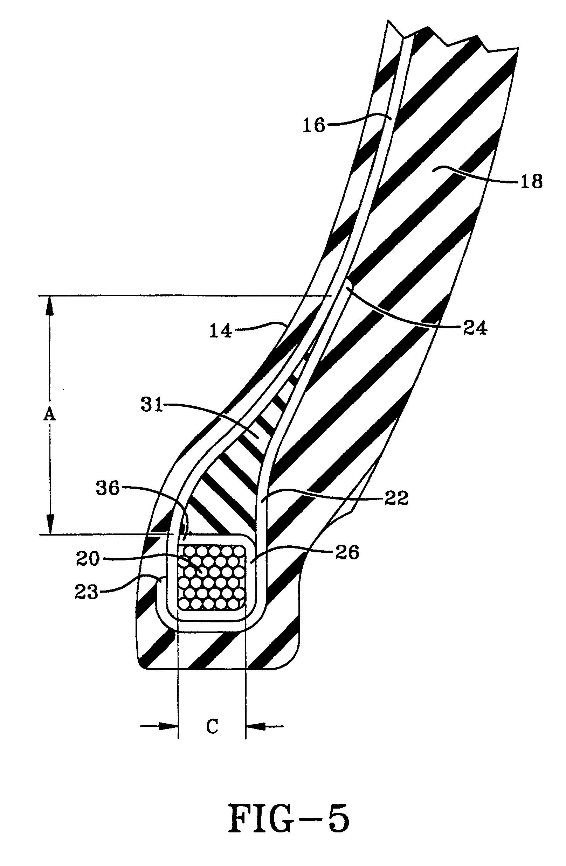

As noted it is contemplated that third ply structures could also be eliminated by employing only the bead wrap ply structure 22 and the second ply structure. Figure 5 illustrates that the invention contemplates as few as one second ply structure 16 and the aforementioned first bead wrap ply structure 22

While certain representative embodiments and details have been shown for the purpose of illustrating the invention, it will be apparent to those skilled in the art that further changes and modifications may be made therein without deviating from the scope of the invention as defined in the appended claims.

## Claims

1. A pneumatic tire (1) having:
(a) a pair of axially spaced apart bead portions (21) with annular bead cores (20), each bead core having a radial cross-sectional shape which is substantially round or polygonal;
(b) a pair of rubber apex strips (31) of a generally triangular cross-section neighboring the bead cores (20) the apex strips having a radial height A and extending radially outwardly from the bead cores into the sidewalls (18) of the tire; and
(c) at least three sets, a first radially inner (15), a second intermediate (16) and a third radially outer (17) set of carcass reinforcing structures, having each a main portion extending between the beads (21) and their edges anchored in the beads, the tire **characterized by**;
the second carcass reinforcing structure (16) being folded radially outwardly around each said bead core (20), so that the two edges (36) of the second carcass reinforcing structure are located between the apexes (31) and their neighboring bead cores (20);
the third carcass reinforcing structure (17) having its turndown portions (27) folded radially inwardly around the second carcass reinforcing structure (16) and the bead cores (20), so that the edges (37) of the plies of the third carcass reinforcing structure are located near the axially inner side of the bead cores;
the first carcass reinforcing structure (15) having its turnup portions (25) folded radially outwardly around each bead core (20), the second carcass reinforcing (16) structure and the third carcass reinforcing structure (17) so that the edges (35) of the plies of the first carcass reinforcing structure are located between the radially outer portion of the bead core (20) and the maximum section height of the tire.

2. The pneumatic tire of claim 1 wherein the first (15), second (16) and third (17) carcass reinforcing structure comprise each one ply.

3. The pneumatic tire of claim 2 wherein the edges (35) of the plies of the first carcass reinforcing structure (15) are located between one third and full radial height A of the apex (31).

4. The pneumatic tire of claim 1 wherein the apex (31) extends radially from the bead core (20) to a maximum comprised between 25% and 55% of the maximum section height of the tire.

5. The pneumatic tire of claim 1 wherein the apex (31) extends radially from the bead core (20) to about 2/5 of the maximum section height of the tire.

6. The pneumatic tire of claim 1 wherein the carcass reinforcing structures (15, 16, 17) are reinforced with textile material, such as nylon.

7. The pneumatic tire of claim 1 wherein each bead core (20) has a cross-sectional shape which is substantially polygonal.

8. The pneumatic tire of claim 6, wherein each bead core (20) has a cross-sectional shape which is substantially rectangular.

9. The pneumatic tire of claim 1, wherein each bead core (20) is at least partially reinforced with steel wire.

10. The pneumatic tire of claim 1, wherein the turnup portions (26) of the second carcass reinforcing structure (16) extend on at least 50% of the maximum axial bead core width C.

11. The pneumatic tire of claim 1, wherein the edges (37) of the plies of the third carcass reinforcing structure (17) are located near the radially inner edges of the bead cores (20).

12. The pneumatic tire of claim 1, wherein the bead portion (21) comprises a toe guard (22) which is at least partly wound around the bead core (20) so as to cover the side of the first carcass reinforcing structure (15) furthest away from the bead core.

13. A pneumatic tire (10) having:
(a) a pair of axially spaced apart bead portions (21) with annular bead cores (20), each bead core having a radial cross-sectional shape which is substantially round or polygonal;
(b) a pair of rubber apex strips (31) of a generally triangular cross-section neighboring the bead cores, the apex strips having a radial height A and extending radially outwardly from the bead cores (20) into the sidewalls (18) of the tire;
(c) a first bead wrap ply (22) structure;
(d) at least two sets, a second intermediate (16) and a third radially outer (17) set of carcass reinforcing structures, having each a main portion extending between the beads (21) and their edges anchored in the beads, the tire **characterized by**;
the second carcass reinforcing structure (16) being folded radially outwardly around each said bead core (20), so that the two edges (36) of the second carcass reinforcing structure are located between the apexes (31) and their neighboring bead cores (20);
the third carcass reinforcing structure (17) having its turndown portions (27) folded radially inwardly around the second carcass reinforcing structure (16) and the bead cores (20), so that the edges (37) of the plies of the third carcass reinforcing structure are located at the radially inner side of the bead cores (20);
the first bead wrap ply structure (22) having its turnup portions folded radially outwardly around each bead core (20), the second carcass reinforcing structure (16) and the third carcass reinforcing structure (17) so that the edges (24) of the plies of the first bead wrap ply structure are located between the radially outer portion of the bead core (20) and the maximum section height of the tire, the first bead wrap ply structure extending axially inward and radially outward from the radially inner portion of the bead core to a radial distance at least one half the radial height of the bead core.

14. A pneumatic tire (10) having:
(a) a pair of axially spaced apart bead portions (21) with annular bead cores (20), each bead core having a radial cross-sectional shape which is substantially round or polygonal;
(b) a pair of rubber apex strips (31) of a generally triangular cross-section neighboring the bead cores the apex stripes having a radial height A and extending radially outwardly from the bead cores (20) into the sidewalls (18) of the tire; and
(c) a first bead wrap ply structure (22);
(d) at least one set, a second set of carcass reinforcing structures (16), having a main portion extending between the beads (21) and their edges anchored in the beads, the tire **characterized by**;
the second carcass reinforcing structure (16) being folded radially outwardly around each said bead core (20), so that the two edges (36) of the second carcass reinforcing structure are located between the apexes (31) and their neighboring bead cores (20);
the first bead wrap ply structure (22) having its turnup portions folded radially outwardly around each bead core (20) and the second carcass reinforcing structure (16) so that the edges (24) of the plies of the first bead wrap ply structure (22) are located between the radially outer portion of the bead core (20) and the maximum section height of the tire, the first bead wrap ply structure (22) extending axially inward and radially outward from the radially inner portion of the bead core to a radial distance at least one half the radial height of the bead core.

## Patentansprüche

1. Luftreifen (1) mit:
(a) einem Paar axial beabstandeter Wulstabschnitte (21) mit ringförmigen Wulstkernen (20), von denen jeder Wulstkern eine im wesentlichen runde oder polygonale Radial-Querschnittsform besitzt;
(b) einem Paar von Gummikernreiterstreifen (31) von allgemein dreieckigem Querschnitt in Nachbarschaft zu den Wulstkernen (20), wobei die Kernreiterstreifen eine radiale Höhe A besitzen und sich radial nach außen von den Wulstkernen in die Seitenwände (18) des Reifens erstrecken; und
(c) mindestens drei Sätzen, einem ersten radial inneren Satz (15), einem zweiten zwischenliegenden Satz (16) und einem dritten radial äußeren Satz (17) von Karkaßverstärkungs-Strukturen, die jeweils einen Hauptabschnitt aufweisen, der sich zwischen den Wülsten (21) erstreckt, und deren Kanten in den Wülsten verankert sind, wobei der Reifen **dadurch gekennzeichnet ist:**
**daß** die zweite Karkaßverstärkungs-Struktur (16) radial nach außen um jeden der Wulstkerne (20) so gefaltet ist, daß die beiden Kanten (36) der zweiten Karkaßverstärkungs-Struktur zwischen den Wulstreitern (31) und ihren benachbarten Wulstkernen (20) liegen;
**daß** bei der dritten Karkaßverstärkungs-Struktur (17) ihre Abschlagabschnitte (27) radial nach innen um die zweite Karkaßverstärkungs-Struktur (16) und die Wulstkerne (20) gefaltet sind, so
**daß** die Kanten (37) der Lagen der dritten Karkaßverstärkungs-Struktur in der Nähe der axial inneren Seite der Wulstkerne liegen;
**daß** bei der ersten Karkaßverstärkungs-Struktur (15) ihre Aufschlagabschnitte (25) radial nach außen um jeden Wulstkern (20), die zweite Karkaßverstärkungs-Struktur (16) und die dritte Karkaßverstärkungs-Struktur (17) so gefaltet sind, daß die Kanten (35) der Lagen der ersten Karkaßverstärkungs-Struktur zwischen dem radial äußeren Abschnitt des Wulstkerns (20) und der maximalen Querschnittshöhe des Reifens liegen.

2. Luftreifen nach Anspruch 1, bei dem die erste (15), die zweite (16) und die dritte (17) Karkaßverstärkungs-Struktur jeweils eine Lage umfaßt.

3. Luftreifen nach Anspruch 2, bei dem die Kanten (35) der Lagen der ersten Karkaßverstärkungs-Struktur (15) zwischen einem Drittel und. der vollen radialen Höhe A des Kernreiters (31) liegen.

4. Luftreifen nach Anspruch 1, bei dem der Kernreiter (31) sich radial von dem Wulstkern (20) maximal bis zwischen 25% und 55% der maximalen Querschnittshöhe des Reifens erstreckt.

5. Luftreifen nach Anspruch 1, bei dem der Kernreiter (31) sich radial von dem Wulstkern (20) zu etwa 2/5 der maximalen Querschnittshöhe des Reifens erstreckt.

6. Luftreifen nach Anspruch 1, bei dem die Karkaßverstärkungs-Strukturen (15, 16, 17) mit Textilmaterial wie Nylon verstärkt sind.

7. Luftreifen nach Anspruch 1, bei dem jeder Wulstkern (20) eine im wesentlichen polygonale Querschnittsform besitzt.

8. Luftreifen nach Anspruch 6, bei dem jeder Wulstkern (20) eine im wesentlichen rechtwinklige Querschnittsform besitzt.

9. Luftreifen nach Anspruch 1, bei dem jeder Wulstkern (20) mindestens teilweise mit Stahldraht verstärkt ist.

10. Luftreifen nach Anspruch 1, bei dem die Aufschlagabschnitte (26) der zweiten Karkaßverstärkungs-Struktur (16) sich auf zumindest 50% der maximalen axialen Wulstkernbreite C erstrecken.

11. Luftreifen nach Anspruch 1, bei dem die Kanten (37) der Lagen der dritten Karkaßverstärkungs-Struktur (17) in der Nähe der radial inneren Kanten der Wulstkerne (20) gelegen sind.

12. Luftreifen nach Anspruch 1, bei dem der Wulstabschnitt (21) einen mindestens teilweise um den Wulstkern (20) gewundenen Zehenschutz (22) umfaßt, um so die am weitesten vom Wulstkern abliegende Seite der ersten Karkaßverstärkungs-Struktur (15) zu bedecken.

13. Luftreifen (10) mit:
(a) einem Paar axial beabstandeter Wulstabschnitte (21) mit ringförmigen Wulstkernen (20), von denen jeder Wulstkern eine im wesentlichen runde oder polygonale Querschnittsform aufweist;
(b) einem Paar Gummikernreiterstreifen (31) mit allgemein dreieckigem Querschnitt in Nachbarschaft zu den Wulstkernen, welche Kernreiterstreifen eine radiale Höhe A besitzen und radial nach außen von den Wulstkernen (20) in die Seitenwände (18) des Reifens abstehen;
(c) einer ersten Wulstumschlag-Lagenstruktur (22);
(d) mindestens zwei Sätzen, einem zweiten zwischenliegenden (16) und einem dritten radial äußeren (17) Satz Karkaßverstärkungs-Strukturen, die jeweils einen Hauptabschnitt aufweisen, der sich zwischen den Wülsten (21) erstreckt, und deren Kanten in den Wülsten verankert sind, welcher Reifen **dadurch gekennzeichnet ist:**
**daß** die zweite Karkaßverstärkungs-Struktur (16) radial nach außen um jeden Wulstkern (20) so gefaltet ist, daß die beiden Kanten (36) der zweiten Karkaßverstärkungs-Struktur zwischen den Wulstreitern (31) und ihren benachbarten Wulstkemen (20) liegen;
**daß** bei der dritten Karkaßverstärkungs-Struktur (17) ihre Abschlagabschnitte (27) so radial nach innen um die zweite Karkaßverstärkungs-Struktur (16) und die Wulstkerne (20) gefaltet sind, daß die Kanten (37) der Lagen der dritten Karkaßverstärkungs-Struktur an der radial inneren Seite der Wulstkerne (20) liegen;
**daß** bei der ersten Wulstumschlag-Lagenstruktur (22) ihre Aufschlagabschnitte radial nach außen so um jeden Wulstkem (20), die zweite Karkaßverstärkungs-Struktur (16) und die dritte Karkaßverstärkungs-Struktur (17) gefaltet sind, daß die Kanten (24) der Lagen der ersten Wulstumschlag-Lagenstruktur zwischen dem radial äußeren Abschnitt des Wulstkerns (20) und der maximalen Querschnittshöhe des Reifens liegen, wobei die erste Wulstumschlag-Lagenstruktur sich axial nach innen und radial nach außen von dem radial inneren Abschnitt des Wulstkerns zu einem radialen Abstand von mindestens der Hälfte der radialen Höhe des Wulstkerns erstreckt.

14. Luftreifen (10) mit:
(a) einem Paar axial beabstandeter Wulstabschnitte (21) mit ringförmigen Wulstkernen (20), von denen jeder Wulstkern eine im wesentlichen runde oder polygonale radiale Querschnittsform aufweist;
(b) einem Paar Gummikernreiterstreifen (31) mit allgemein dreieckigem Querschnitt in Nachbarschaft zu den Wulstkernen, welche Kernreiterstreifen eine radiale Höhe A haben und radial nach außen von den Wulstkernen (20) in die Seitenwände (18) des Reifens abstehen; und
(c) einer ersten Wulstumschlag-Lagenstruktur (22);
(d) mindestens einem Satz, einem zweiten Satz von Karkaßverstärkungs-Strukturen (16), die einen Hauptabschnitt aufweisen, der sich zwischen den Wülsten (21) erstreckt, und deren Kanten in den Wülsten verankert sind, wobei der Reifen **dadurch gekennzeichnet ist:**
**daß** die zweite Karkaßverstärkungs-Struktur (16) radial nach außen um jeden Wulstkern (20) so gefaltet ist, daß die beiden Kanten (36) der zweiten Karkaßverstärkungs-Struktur zwischen den Wulstreitern (31) und ihren benachbarten Wulstkernen (20) liegen;
**daß** bei der ersten Wulstumschlag-Lagenstruktur (22) ihre Aufschlagabschnitte radial nach außen so um jeden Wulstkern (20) und die zweite Karkaßverstärkungs-Struktur (16) gefaltet sind, daß die Kanten (24) der Lagen der ersten Wulstumschlag-Lagenstruktur (22) zwischen dem radial äußeren Abschnitt des Wulstkerns (20) und der maximalen Querschnittshöhe des Reifens liegen, die erste Wulstumschlag-Lagenstruktur (22) sich axial nach innen und radial nach außen von dem radial inneren Abschnitt des Wulstkerns zu einem radialen Abstand von mindestens einer Hälfte der radialen Höhe des Wulstkerns erstreckt.

## Revendications

1. Bandage pneumatique (1) possédant :
(a) une paire de portions de talons (21) espacées l'une de l'autre en direction axiale, comprenant des tringles de talons annulaires (20), chaque tringle de talon possédant une forme radiale en section transversale qui est essentiellement arrondie ou polygonale ;
(b) une paire de bourrages sur tringles en caoutchouc (31) possédant une section transversale généralement triangulaire, adjacents aux tringles de talons (20), les bourrages sur tringles possédant une hauteur radiale A et s'étendant vers l'extérieur en direction radiale à partir des tringles de talons jusque dans les flancs (18) du bandage pneumatique ; et
(c) au moins trois groupes, un premier groupe interne en direction radiale (15), un deuxième groupe intermédiaire (16), un troisième groupe externe en direction radiale (17), des structures de renforcement de carcasse, chacune possédant une portion principale s'étendant entre les talons (21) et leurs bords étant ancrés dans les talons, le bandage pneumatique étant **caractérisé par le fait que**
la deuxième structure de renforcement de carcasse (16) est repliée vers l'extérieur en direction radiale autour de chacune desdites tringles de talons (20) de telle sorte que les deux bords (36) de la deuxième structure de renforcement de carcasse sont situés entre les bourrages sur tringles (31) et leur tringles de talons adjacentes (20) ;
les portions de retournement vers le bas (27) de la troisième structure de renforcement de carcasse (17) sont repliées en direction radiale vers l'intérieur autour de la deuxième structure de renforcement de carcasse (16) et autour des tringles de talons (20) de telle sorte que les bords (37) des nappes de la troisième structure de renforcement de carcasse sont situés à proximité du côté interne des tringles de talons en direction axiale ;
les portions de retournement vers le haut (25) de la première structure de renforcement de carcasse (15) sont repliées vers l'extérieur en direction radiale autour de chaque tringle de talon (20), autour de la deuxième structure de renforcement de carcasse (16) et autour de la troisième structure de renforcement de carcasse (17), de telle sorte que les bords (35) des nappes de la première structure de renforcement de carcasse sont disposés entre la portion externe de la tringle de talon (20) en direction radiale et la hauteur de section maximale du bandage pneumatique.

2. Bandage pneumatique selon la revendication 1, dans lequel la première structure de renforcement de carcasse (15), la deuxième structure de renforcement de carcasse (16) et la troisième structure de renforcement de carcasse (17) comprennent chacune une nappe.

3. Bandage pneumatique selon la revendication 2, dans lequel les bords (35) des nappes de la première structure de renforcement de carcasse (15) sont disposés entre un tiers de la hauteur radiale et la hauteur radiale totale A du bourrage sur tringle (31).

4. Bandage pneumatique selon la revendication 1, dans lequel le bourrage sur tringle (31) s'étend en direction radiale depuis la tringle de talon (20) jusqu'à un maximum compris entre 25 % et 55 % de la hauteur de section maximale du bandage pneumatique.

5. Bandage pneumatique selon la revendication 1, dans lequel le bourrage sur tringle (31) s'étend en direction radiale depuis la tringle de talon (20) jusqu'à environ 2/5 de la hauteur de section maximale du bandage pneumatique.

6. Bandage pneumatique selon la revendication 1, dans lequel les structures de renforcement de carcasse (15, 16, 17) sont renforcées avec une matière textile telle que du nylon.

7. Bandage pneumatique selon la revendication 1, dans lequel chaque tringle de talon (20) possède une configuration en section transversale qui est essentiellement polygonale.

8. Bandage pneumatique selon la revendication 6, dans lequel chaque tringle de talon (20) possède une configuration en section transversale qui est essentiellement rectangulaire.

9. Bandage pneumatique selon la revendication 1, dans lequel chaque tringle de talon (20) est renforcée au moins en partie avec des fils métalliques en acier.

10. Bandage pneumatique selon la revendication 1, dans lequel les portions de retournement vers le haut (26) de la deuxième structure de renforcement de carcasse (16) s'étendent sur au moins 50 % de la largeur maximale axiale C de la tringle de talon.

11. Bandage pneumatique selon la revendication 1, dans lequel les bords (37) des nappes de la troisième structure de renforcement de carcasse (17) sont disposés à proximité des bords internes des tringles de talons (20) en direction radiale.

12. Bandage pneumatique selon la revendication 1, dans lequel la portion de talon (21) inclut une structure de nappe d'enveloppement de talon (22) qui est au moins partiellement pliée autour de la tringle de talon annulaire (20) de manière à couvrir le côté de la première structure de renforcement de carcasse (15) la plus éloignée de la tringle de talon.

13. Bandage pneumatique (10) possédant :
(a) une paire de portions de talons (21) espacées l'une de l'autre en direction axiale, comprenant des tringles de talons annulaires (20), chaque tringle de talon possédant une forme radiale en section transversale qui est essentiellement arrondie ou polygonale ;
(b) une paire de bourrages sur tringles en caoutchouc (31) possédant une section transversale généralement triangulaire, adjacents aux tringles de talons (20), les bourrages sur tringles possédant une hauteur radiale A et s'étendant vers l'extérieur en direction radiale à partir des tringles de talons jusque dans les flancs (18) du bandage pneumatique ; et
(c) une première structure de nappe d'enveloppement de talon (22) ;
(d) au moins deux groupes, un deuxième groupe intermédiaire (16) et un troisième groupe externe en direction radiale (17), de structures de renforcement de carcasse, chacune possédant une portion principale s'étendant entre les talons (21) et leurs bords étant ancrés dans les talons, le bandage pneumatique étant **caractérisé par le fait que**
la deuxième structure de renforcement de carcasse (16) est repliée vers l'extérieur en direction radiale autour de chacune desdites tringles de talons (20) de telle sorte que les deux bords (36) de la deuxième structure de renforcement de carcasse sont situés entre les bourrages sur tringles (31) et leurs tringles de talons adjacentes (20) ;
les portions de retournement vers le bas (27) de la troisième structure de renforcement de carcasse (17) sont repliées en direction radiale vers l'intérieur autour de la deuxième structure de renforcement de carcasse (16) et autour des tringles de talons (20) de telle sorte que les bords (37) des nappes de la troisième structure de renforcement de carcasse sont situés à proximité du côté interne des tringles de talons en direction axiale ;
les portions de retournement vers le haut de la première structure de nappe d'enveloppement de talon (22) sont repliées vers l'extérieur en direction radiale autour de chaque tringle de talon (20), autour de la deuxième structure de renforcement de carcasse (16) et autour de la troisième structure de renforcement de carcasse (17), de telle sorte que les bords (24) des nappes de la première structure de nappe d'enveloppement de talon sont disposés entre la portion externe de la tringle de talon (20) en direction radiale et la hauteur de section maximale du bandage pneumatique, la première structure de nappe d'enveloppement de talon s'étendant vers l'intérieur en direction axiale et vers l'extérieur en direction radiale à partir de la portion interne de la tringle de talon en direction radiale jusqu'à une distance radiale représentant au moins la moitié de la hauteur radiale de la tringle de talon.

14. Bandage pneumatique (10) possédant :
(a) une paire de portions de talons (21) espacées l'une de l'autre en direction axiale, comprenant des tringles de talons annulaires (20), chaque tringle de talon possédant une forme radiale en section transversale qui est essentiellement arrondie ou polygonale ;
(b) une paire de bourrages sur tringles en caoutchouc (31) possédant une section transversale généralement triangulaire, adjacents aux tringles de talons (20), les bourrages sur tringles possédant une hauteur radiale A et s'étendant vers l'extérieur en direction radiale à partir des tringles de talons jusque dans les flancs (18) du bandage pneumatique ; et
(c) une première structure de nappe d'enveloppement de talon (22) ;
(d) au moins un groupe, un deuxième groupe intermédiaire de structures de renforcement de carcasse (16), possédant une portion principale s'étendant entre les talons (21) et leurs bords étant ancrés dans les talons, le bandage pneumatique étant **caractérisé par le fait que**
la deuxième structure de renforcement de carcasse (16) est repliée vers l'extérieur en direction radiale autour de chacune desdites tringles de talons (20) de telle sorte que les deux bords (36) de la deuxième structure de renforcement de carcasse sont situés entre les bourrages sur tringles (31) et leur tringles de talons adjacentes (20) ;
les portions de retournement vers le haut de la première structure de nappe d'enveloppement de talon (22) sont repliées vers l'extérieur en direction radiale autour de chaque tringle de talon (20) et autour de la deuxième structure de renforcement de carcasse (16), de telle sorte que les bords (24) des nappes de la première structure de nappe d'enveloppement de talon sont disposés entre la portion externe de la tringle de talon (20) en direction radiale et la hauteur de section maximale du bandage pneumatique, la première structure de nappe d'enveloppement de talon s'étendant vers l'intérieur en direction axiale et vers l'extérieur en direction radiale à partir de la portion interne de la tringle de talon en direction radiale jusqu'à une distance radiale représentant au moins la moitié de la hauteur radiale de la tringle de talon.
